# EUROPÄISCHE PATENTSCHRIFT

(11) **EP 1 296 757 B1**
(45) Veröffentlichungstag und Bekanntmachung des Hinweises auf die Patenterteilung: **06.10.2004**
(21) Anmeldenummer: 01953126.8
(22) Anmeldetag: 29.06.2001
(51) Int. Cl.: B01J 19/00, B01L 3/02, C12Q 1/68

(54) **VORRICHTUNG ZUR HERSTELLUNG VON OLIGOMER-ARRAYS**
DEVICE FOR PRODUCING OLIGOMER ARRAYS
DISPOSITIF DE FABRICATION DE RESEAUX D'OLIGOMERES

(30) Priorität: 30.06.2000 DE 10032811
(43) Veröffentlichungstag der Anmeldung: 02.04.2003
(73) Patentinhaber: Epigenomics AG, 10435 Berlin (DE)
(72) Erfinder: BERLIN, Kurt, 14532 Stahnsdorf (DE)
(74) Vertreter: Schubert, Klemens, Dr.
(86) Internationale Anmeldenummer: PCT/DE2001/002429
(87) Internationale Veröffentlichungsnummer: WO 2002/002223

(56) Entgegenhaltungen:
- WO-A-99/22867
- EISEN M B ET AL: "12 DNA ARRAYS FOR ANALYSIS OF GENE EXPRESSION" METHODS IN ENZYMOLOGY, ACADEMIC PRESS INC, SAN DIEGO, CA, US, Bd. 303, 1999, Seiten 179-205, XP000995864 ISSN: 0076-6879

## Beschreibung

Die vorliegende Erfindung betrifft eine Vorrichtung zur Herstellung von Oligomer-Arrays.

Oligomer-Arrays (DNA-Chips) werden heute vielfach zur Analyse von Polymorphismen in Nukleinsäureproben eingesetzt, beispielsweise zur Analyse von Expressionsmustern in bestimmten Zellen oder Geweben. Sie werden auch zur Diagnose von Erbkrankheiten sowie zur Teilsequenzierung und zum Auffinden von Polymorphismen weiter entwickelt. Die Erfindung betrifft eine Vorrichtung zur hochflexiblen und kostengünstigen Herstellung relativ kleiner Stückzahlen unterschiedlicher Oligomer-Arrays aus Monomeren, ohne dabei vorgefertigte Oligomer-Bausteine zu verwenden.

DNA-Chips sind kleinste, meist planare Oberflächen, auf welchen räumlich geordnet eine große Anzahl verschiedener Oligomere (kurze, einsträngige DNA-Moleküle) angebracht sind. Solche Chips werden beispielsweise zur parallelen Erkennung zahlreicher DNA-Sequenzen in einer präparierten Gewebeprobe verwendet. Dazu benetzt man die Chipoberfläche mit einer Lösung von DNA-Fragmenten aus der Gewebeprobe, worauf sich komplementär passende DNA-Stücke aus der Lösung an die entsprechenden, an die Chipoberfäche angebrachten Oligomere anlagern (Hybridisierung). Danach bestimmt man mit einer geeigneten Methode wie z.B. Fluoreszenzmarkierung, an welchen Stellen auf dem Chip eine Hybridisierung stattgefunden hat. Wenn man weiß, wo auf dem Chip welche Oligomere angebracht sind, kann man somit Rückschlüsse auf DNA-Sequenzen in der Gewebeprobe ziehen. Dazu definiert man in der Regel auf der Chip-Trägerfläche ein dichtes rechtwinkliges Raster. Auf jedem Rasterpunkt ist in Form eines kleinen Flecks (Spot) genau eine Sorte von Oligomer angebracht. Die maximal mögliche Anzahl von verschiedenen DNA-Sequenzen auf dem Chip ist demzufolge normalerweise gleich der Anzahl der Rasterpunkte. Da man möglichst viele Sorten von Oligomeren auf einen Chip aufbringen will, die Chips aber gleichzeitig so klein wie möglich sein sollten, um effektiv hybridisiert werden zu können, ist es ein wichtiges Ziel bei der Herstellung von DNA-Chips, eine möglichst hohe Rasterdichte zu erreichen.

Im Stand der Technik sind verschiedene Verfahren zur DNA-Chip Herstellung bekannt.
1) Alle Oligomere werden auf herkömmliche Weise einzeln synthetisiert und danach an den vorgesehenen Rasterpunkten auf den Träger aufpipettiert, typischerweise von einer automatischen Mikropipettieranlage. Diese Methode ist sehr aufwendig und teuer, da jedes Oligomer einzeln hergestellt bzw. gekauft und von Hand der Pipettieranlage zugeführt werden muss. Die Rasterdichte ist durch die hohe Winkelungenauigkeit der heute verfügbaren, typischerweise piezoelektrischen Mikropipetten stark limitiert.
2) Die Oligomere werden mit Hilfe einer automatischen Mikrodosieranlage direkt auf dem Chip synthetisiert. Auf jedem Rasterpunkt wird die dort vorgesehene Oligomerkette Baustein für Baustein (Nukleobasen) aufgebaut. Das chemische Verfahren ist grundsätzlich das gleiche wie bei der herkömmlichen Oligomer-Synthese im Reagenzglas. Der Unterschied ist, dass alle Oligomere gleichzeitig, von einer einzigen automatischen Anlage direkt am jeweils vorgesehenen Bestimmungsort hergestellt werden. Die bei Methode 1) separaten Arbeitsschritte Oligomer-Synthese und Mikropipettierung werden somit zu einem einheitlichen Arbeitsschritt zusammengefasst. Diese "in situ" Synthese läuft normalerweise wie folgt ab: Auf einem vorpräparierten Substrat tropft der Dosierautomat auf jedem Rasterpunkt die dort vorgesehene erste Nukleobase auf. Dies ist mechanisch nicht sehr aufwendig, da es nur 4 verschiedene Nukleobasen (C, T, G, A) gibt. Man kann dafür z.B. 4 aneinandergekoppelte Mikropipetten verwenden. Nach dem Auftragen des ersten Nukleosidbausteins auf jedem Rasterpunkt wird das Substrat gewaschen und nach einem optionalen "Capping Schritt" die Schutzgruppen an den 5'OH Funktionen entfernt, um die Reaktion mit dem jeweils nachfolgenden Nukleosidbaustein zu ermöglichen. Danach wird an jedem Rasterpunkt die zweite Nukleobase aufpipettiert. Das Substrat wird dann wieder gewaschen und entschützt. Auf diese Weise baut man Schritt für Schritt auf jedem Rasterpunkt die jeweils erforderlichen Oligomerketten auf. Diese Methode ist nicht besonders schnell, da nacheinander auf jedem Rasterpunkt für jede Nukleobase neu pipettiert werden muss. Wie bei Methode 1) ist die Rasterdichte durch die Ungenauigkeit der Mikropipetten beschränkt. Die Ungenauigkeit wirkt sich hier noch schlimmer aus, da jeder Rasterpunkt mehrmals nacheinander auf möglichst identische Weise getroffen werden muss.
3) Die Oligomere werden wie bei 2) direkt auf den Träger synthetisiert, die gezielte Anbindung der richtigen Nukleobasen an den richtigen Rasterpunkten geschieht jedoch durch eine vollkommen parallele, photolithographische Technik anstelle von sequenziellen, zielgenauen Pipettierschritten. Das Verfahren basiert darauf, dass man mit Licht einer bestimmten Wellenlänge gezielt 5'-OH Schutzgruppen von Oligonukleotiden entfernen kann. Durch geeignete örtliche Bestrahlungsmuster kann man somit Oligonukleotid-Enden an genau jenen Rasterpunkten reaktionsfähig machen, an denen man im nächsten Schritt ein neues Nukleosid anbringen will. Bei vollständiger Benetzung der Chipoberfläche mit einer Nukleotidbaustein-Lösung wird somit nur an den vorher belichteten Stellen ein Nukleotidbaustein angebunden, alle unbeachteten Stellen bleiben unverändert. Die Örtlichen Belichtungsmuster werden erzeugt, indem man eine mikrophotographische schwarzweiss Maske zwischen dem Substrat und der Lichtquelle positioniert, die alle Rasterstellen abdeckt, die nicht reaktionsfähig gemacht werden sollen. Die Verlängerung der Oligomer-Ketten auf allen Rasterpunkten um eine Nukleobase geschieht demnach wie folgt: Mit Hilfe einer ersten Maske werden genau jene Rasterpunkte belichtet, welche um die erste der 4 möglichen Sorten von Nukleobasen (z.B. C) erweitert werden müssen. Danach wird der Chip mit einer Lösung des entsprechenden Nukleotidbausteins benetzt, worauf nur die belichteten Punkte um diese Base verlängert werden. Da die neu angebundenen Basen noch alle über eine Schutzgruppe verfügen, werden sie in den folgenden Schritten nicht weiter reagieren, bis ihre Schutzgruppen durch eine weitere Belichtung abgespaltet werden. Nach diesem Reaktionsschritt wird der Chip gewaschen. Nun werden mit Hilfe einer zweiten Maske genau jene Rasterstellen belichtet, welche um die zweite der 4 möglichen Sorten von Nukleobasen (z.B. T) erweitert werden müssen. Darauf wird der Chip wiederum mit einer Lösung des entsprechenden Nukleotidbausteins benetzt und die belichteten Stellen dadurch um diese Base verlängert. Genauso verfährt man für die verbleibenden zwei Basen (z.B. G und A). Für die Verlängerung aller Oligomere um eine Nukleobase benötigt man demzufolge vier Belichtungsschritte bzw. 4 Photomasken. Diese Methode ist wegen der hohen Parallelität sehr effizient, zudem ist sie wegen der hohen Präzision, die mit Photolithographie erreicht werden kann, geeignet, um sehr hohe Rasterdichten zu erzielen. Allerdings ist die Methode sehr aufwendig und somit teuer, da man für die Herstellung einer bestimmten Sorte von Chip zuerst eine große Anzahl von Photomasken erzeugen muss. Bei hohen Rasterdichten werden zudem hohe Anforderungen an die Positionierungsgenauigkeit der Masken während der Belichtung gestellt, die effizient nur durch Verwendung von teuren Apparaturen erfüllt werden können.
4) Man synthetisiert die Chips wie bei 3) nach dem photolithographischen Verfahren, belichtet hier aber die einzelnen Rasterpunkte mit Hilfe von Reflexion an kleinen Spiegeln. Dafür wird ein spezieller Typ von Siliziumchip verwendet, der kommerziell für die Verwendung in Videoprojektoren hergestellt wird. Es handelt sich bei diesem Chip um eine kleine (einige Quadratzentimeter große) Siliziumoberfläche, auf dem in einem rechtwinklige Raster eine große Zahl (z.B. 800x600) mikroskopisch kleiner, rechteckiger (z.B. 16µm x 16µm) Aluminiumspiegel angebracht sind. Jeder der Spiegel ist bezüglich seiner Diagonalachse beweglich gelagert und kann in zwei stabile Positionen A und B gekippt werden, die sich um einige Winkelgrade unterscheiden. Welcher der Spiegel sich in welcher der beiden Positionen befindet, kann durch elektronische Signale an den Chipeingängen beliebig eingestellt werden. So ein Mikrospiegel-Chip ("micromirror device") wird zusammen mit einer Lichtquelle, einer Optik und der zu belichtenden Array-Oberfläche derart angeordnet, dass jeder der Spiegel das reflektierte Licht in der Position A auf das Array wirft und in der Position B auf eine lichtschluckende Fläche neben dem Array. Dabei gehört zu jeder Rasterposition auf dem zu belichtenden Array genau ein Spiegel, welcher Licht genau auf diese Rasterposition reflektiert, falls er sich in Position A befindet.

Diese Methoden nach dem Stand der Technik weisen eine Reihe von Nachteilen auf. Die attraktivste Methoden, um günstig und flexibel DNA-Arrays hoher Rasterdichte herzustellen, ist die Methode mit dem Mikrospiegel-Chip. Jedoch ist es bei all diesen photolithographischen Methoden erforderlich, spezielle photolabile Synthesebausteine zu verwenden, die nicht kommerziell erhältlich sind. Zudem dauern die Synthesen, unabhängig von der Dichte, relativ lange, da für die Bausteine bestimmte Belichtungszeiten erforderlich sind.

Für hochflexible Chips mit geringerer Dichte besteht demnach Bedarf an einem mechanisch robusten Gerät, welches hinsichtlich Steuerung und Robotik auf bekannter Spottingtechnologie basiert und welches dennoch in der Lage ist, beliebige Chips mit den unterschiedlichsten Anordnungen von Sequenzen ausgehend von einem einzigen Satz von Chemikalien herzustellen.

Aufgabe der vorliegenden Erfindung ist es daher eine Vorrichtung zu schaffen, welche die Nachteile des Standes der Technik überwindet.

Die Aufgabe wird erfindungsgemäß durch eine Vorrichtung mit den Merkmalen des Anspruchs 1 gelöst. Vorteilhafte Weiterbildungen der Erfindung sind in den abhängigen Ansprüchen gekennzeichnet.

Gegenstand der vorliegenden Erfindung ist eine Vorrichtung zur Herstellung von Oligomer-Arrays, umfassend
eine in mindestens zwei Dimensionen bewegbare Anordnung von mindestens zwei Reihen parallel zueinander ausgerichteter Nadeln, die senkrecht auf jede Position einer Grundplatte definiert bewegt werden können, nicht aber unabhängig voneinander;
einen Satz von mindestens zwei parallelen, zueinander verschiebbaren Reihen von Behältern zur Aufnahme von Synthesereagenzien, wobei der Abstand dieser Behälter jeweils dem der Nadeln geteilt durch eine Ganze Zahl Z entspricht;
eine Kammer zur Aufnahme einer Oberfläche, welche als Träger für die Oligomer-Arrays dient und durch welche Reagenzien über die Oberfläche leitbar sind.

Erfindungsgemäß bevorzugt ist dabei, dass die Reihen von Behältern, welche die Monomere enthalten, zueinander jeweils einen Abstand von 4,5 mm aufweisen.

Erfindungsgemäß bevorzugt ist weiterhin, dass die Anzahl der Reihen der Behälter der Anzahl der Reihen von Nadeln entspricht.

Besonders bevorzugt ist es, dass jede Reihe von Behältern mindestens n^{k} + (k - 1) miteinander fest verbundene Behälter umfasst, wobei k die Anzahl der Nadeln in einer Reihe und n die Anzahl der verwendeten unterschiedlichen Monomere ist.

Außerdem ist bevorzugt, dass die ganze Zahl Z eins, zwei, drei oder vier ist.

Erfindungsgemäß bevorzugt ist auch, dass die Anzahl n der unterschiedlichen verwendeten Monomere drei oder vier ist. Außerdem ist bevorzugt, dass die Anzahl der Nadeln k in einer Reihe 3 oder 4 ist.

Besonders bevorzugt ist ferner eine erfindungsgemäße Vorrichtung, bei der durch Verschieben der Reihen von Behältern zueinander und geeignetes Befüllen der Behälter je einer Reihe mit Monomeren, der Satz von Nadeln durch einmaliges, gleichzeitiges Bewegen in die Behälter mit jeder beliebigen Kombination von Monomeren kontaktierbar ist.

.Bevorzugt ist dabei, dass die Reihen von Behältern jeweils in gleicher Reihenfolge mit Lösungen der Monomere befüllt sind.

Bevorzugt ist ferner eine erfindungsgemäße Vorrichtung bei der weiterhin ein Behälter und/oder Satz von Behältern vorgesehen ist, wobei diese Behälter mit einer Waschlösung befüllt sind, in der sich Oligonukleotide oder PNAs lösen, und wobei der Satz von Nadeln durch gleichzeitiges Eintauchen in diese Waschlösung vor jedem Wechsel von Monomeren gereinigt wird.

Besonders ist es erfindungsgemäß bevorzugt, dass jeder der Behälter Monomere enthält, die zur Synthese von Oligonukleotiden geeignet sind.

Bevorzugt ist aber auch, dass jeder der Behälter Monomere enthält, die zur Synthese von Peptide Nucleic Acids (PNAs) geeignet sind.

Ein weiterer Gegenstand der vorliegenden Erfindung ist die Verwendung einer erfindungsgemäßen Vorrichtung zur Herstellung von Oligomer-Arrays.

Ganz besonders bevorzugt ist die Verwendung einer erfindungsgemäßen Vorrichtung zur Herstellung von Oligomer-Arrays zur Analyse von Cytosin-Methylierungsmustern und/oder SNPs (Single Nucleotide Polymorphisms).

Die vorliegende Erfindung beschreibt somit eine Vorrichtung, welche die Nachteile des Standes der Technik überwindet. Die Vorrichtung soll zur hochflexiblen und kostengünstigen Herstellung relativ kleiner Stückzahlen unterschiedlicher Oligomer-Arrays aus Monomeren dienen, ohne dabei vorgefertigte Oligomer-Bausteine zu verwenden.

Beschrieben wird eine Vorrichtung zur Herstellung von Oligomer-Arrays (DNA-Chips), die aus drei Komponenten besteht.
1. Die erste Komponente ist eine in mindestens zwei Dimensionen bewegbare Anordnung von mindestens zwei Reihen parallel ausgerichteter Nadeln (Pins), die senkrecht auf bestimmte Positionen einer Grundplatte definiert bewegt werden können. Es ist für die Funktion der Vorrichtung nicht von Bedeutung, ob die Nadeln unabhängig voneinander bewegt werden können.
   Die Anzahl der Nadeln in einer Reihe beträgt vorzugsweise 3 oder 4. In einer besonders bevorzugten Ausführung der Erfindung beträgt die Anzahl der Reihen ebenfalls 3 oder 4. In einer wiederum besonders bevorzugten Ausführung entspricht die Anzahl der Reihen der Anzahl der Nadeln je Reihe. Die Nadelanordnung kann ein kommerzielles Pin-Tool sein, wie es auch zum Spotten von Oligonukleotidiösungen auf Oberflächen zur Herstellung von Oligomerarrays eingesetzt wird. Derartige Pin-Tools werden beispielsweise von der Firma Biorobotics kommerziell angeboten. In einer besonders bevorzugten Variante beträgt der Abstand der Pins 4,5 mm.
2. Die zweite Komponente ist eine Kammer, welche die Oberfläche, welche als Substrat für die Oligomer-Arrays dient, aufnimmt und durch die Reagenzien über die Oberfläche geleitet werden können. Die Kammer besitzt vorzugsweise einen Deckel, welcher automatisch gesteuert öffnet, wenn mit den Nadeln etwas auf das Substrat aufgebracht werden soll, und der wieder schließt, wenn Reagenzien über die Oberfläche geleitet werden. Vorzugsweise sind das Substrat und der Deckel durch eine Dichtung getrennt, welche zugleich das Volumen der Kammer definiert. In einer besonders bevorzugten Variante beinhaltet die Vorrichtung mehrere dieser Kammern, um mehrere Substrate aufnehmen zu können. In einer weiteren bevorzugten Ausführung werden der Kammer durch ein System von Schläuchen und Ventilen, die elektrisch oder auf eine andere Art automatisiert ansteuerbar sind, Lösungen und Reagenzien zugeführt. Bevorzugt besteht die Kammer, zumindest aber der Deckel aus chemisch widerstandsfähigem Material, wie beispielsweise POM. Gleiches gilt für die Dichtung.
3. Die dritte Komponente ist ein Satz von mindestens zwei parallelen, zueinander verschiebbaren Reihen von Behältern, deren Abstand jeweils dem der Nadeln geteilt durch eine Ganze Zahl entspricht und die zur Aufnahme von Synthesereagenzien dienen. Die Ganze Zahl ist bevorzugt eins, zwei, drei oder vier. Bevorzugt weisen die Reihen der Behälter einen Abstand von 4-5 mm auf. Um eine Synthese durchzufahren, enthält jeder der Behälter vorzugsweise Monomere, die zur Synthese von Oligonukleotiden geeignet sind. Besonders bevorzugt enthält jeder Behälter für die Synthese von Peptide Nucleic Acids (PNAs) geeignete Monomere. Durch Verschiebung der Reihen der Behälter zueinander können unterschiedliche Kombinationen von Monomeren benachbart vorliegen. Wenn die Reihen von Behältern nach bestimmten Schemata befüllt werden, so können beliebige Kombinationen von Monomeren in einer Reihe dargestellt werden. Die Vorgehensweise wird abschließend in einem Beispiel genauer erläutert.

Vorzugsweise ist die Anzahl der unterschiedlichen verwendeten Monomere für die Synthese von Oligonukleotiden oder von Peptide Nucleic Acids (PNAs) drei oder vier.

Bevorzugt weisen die Reihen von Behältern, welche die Monomere enthalten, zueinander jeweils einen Abstand von 4.5 mm auf. Die Anzahl der Reihen der Behälter entspricht vorzugsweise der Anzahl der Reihen von Nadeln. Jede Reihe von Behältern umfasst bevorzugt mindestens n^{k} + (k - 1) miteinander fest verbundene Behälter. Dabei ist k die Anzahl der Nadeln in einer Reihe und n die Anzahl der verwendeten unterschiedlichen Monomere.

Die Reihen von Behältern werden jeweils vorzugsweise in gleicher Reihenfolge mit Lösungen der Monomere befüllt, da für jede Reihe üblicherweise die gleichen Kombinationen von Monomeren bereitgestellt werden müssen.

Durch Verschieben der Reihen von Behältern zueinander und geeignetes Befüllen der Behälter mit je einer Reihe von Monomeren, ist der Satz von Nadeln besonders bevorzugt durch einmaliges, gleichzeitiges Bewegen in die Behälter mit jeder beliebigen Kombination von Monomeren kontaktierbar.

Der Satz von Nadeln wird bevorzugt durch gleichzeitiges Eintauchen in eine Waschlösung, in der sich Oligonukleotide oder PNAs lösen, vor jedem Wechsel der Monomere gereinigt.

Die beschriebene Vorrichtung verwendet man bevorzugt zur Herstellung von OligomerArrays. Diese Arrays dienen besonders bevorzugt zur Analyse von Cytosin-Methylierungsmustern und/oder SNPs (Single Nucleotide Polymorphisms).

Das folgende Beispiel erläutert die Erfindung.

### Beispiel

Es sollen beliebige Kombinationen von drei unterschiedlichen Monomeren von 16 miteinander in einem 4x4 Raster starr verbundenen Nadeln (Pins) auf eine Oberfläche aufgetragen werden, um auf selbiger einen Oligomer-Array zu synthetisieren.

Die Verwendung von 3 beliebig kombinierbaren Monomeren ist im Bereich der Detektion von Cytosin Methylierung, einer bevorzugten Anwendung, häufig der Fall, da nach der hierfür erforderlichen Behandlung der DNA-Proben ein grosser Teil der Cytosinbasen in Uracil und nach einer PCR in Thymidin umgewandelt wird, so dass der jeweils untersuchte Strang im wesentlichen aus drei Basen besteht. Dies gilt folglich auch für die Oligonukleotide, die zur Detektion der Probe auf dem Oligomerarray dienen.

Folglich gelten für die beweglichen Reihen von Monomeren die folgenden Bedingungen: in jeder Reihe muss, da sich 4 Pins in einer Reihe befinden (4x4 Raster), jede Kombination von Monomeren darstellbar sein. Im vorliegenden Beispiel besteht die Reihe aus 105 nebeneinander befindlichen Behältern, welche die drei verwendeten Monomere (A, C und T) in der Reihenfolge enthalten. In diesem Fall entspricht der Abstand der Behälter dem der Nadeln (4,5 mm), so dass ein Eintauchen der vier Nadeln, wenn die linke Nadel in die dritte Position der Reihe taucht, zur Aufnahme von Monomeren in der Kombination CACC führt.

Aus dem 4x4 Raster der Pins folgt zudem, dass vier Reihen erforderlich sind. In diesem Beispiel sind die Reihen identisch und, gemessen von Behältermitte zu Behältermitte, 4,5 mm voneinander entfernt. Da die Reihen zueinander verschiebbar sind, kann beispielsweise aus der zweiten Reihe eine andere Basenkombination aufgenommen werden (mit der zweiten Nadelreihe), als aus der ersten Reihe. Eine Verschiebung der zweiten Reihe gegenüber der ersten um 9 mm (2x4,5 mm, dem Behälterabstand) nach links führt dazu, dass die zweite Reihe der Nadeln nicht wie die erste CACC aufnimmt, sondern aufgrund der Verschiebung um zwei Behälter CCAA. Analoges gilt für die folgenden beiden Reihen. Die Konstruktion erlaubt es in diesem Beispiel, jegliche Kombination von Monomeren mit den 16 (4x4) Nadeln zu kontaktieren. Dafür müssen die Nadeln nur einmal gleichzeitig in die Behälterreihen getaucht werden. Im nächsten Schritt kann dann, abhängig von den Sequenzen der auf dem Array zu synthetisierenden Oligomere, eine andere Kombination von Monomeren aufgebracht werden. Die Synthese der Oligomere erfordert weiterhin, dass zwischen dem Aufbringen der Oligomere Waschschritte erfolgen müssen und die Kontaktierung der Oberfläche mit weiteren Reagenzien stattfindet. Die mit einem sich automatisiert öffnendem Deckel versehene Kammer zur Aufnahme der Substrate für die Arrayherstellung erfüllt diese Aufgabe zusammen mit einem ansteuerbaren System, weiches zur Zuführung der Reagenzien und Waschlösungen dient.

In den Figuren wird eine Ausführungsform einer erfindungsgemäßen Vorrichtung dargestellt, welche sich insbesondere für die Ausführung des oben beschriebenen Beispiels besonders eignet.

Es zeigt:
Figur 1: die perspektivische Ansicht eines Ausführungsbeispiels einer erfindungsgemäßen Vorrichtung, wobei die Zuführung von Reagenzien der Übersichtlichkeit halber nicht dargestellt ist und
Figur 2: eine perspektivische Ansicht eines Teils der erfindungsgemäßen Vorrichtung gemäß Figur 1.

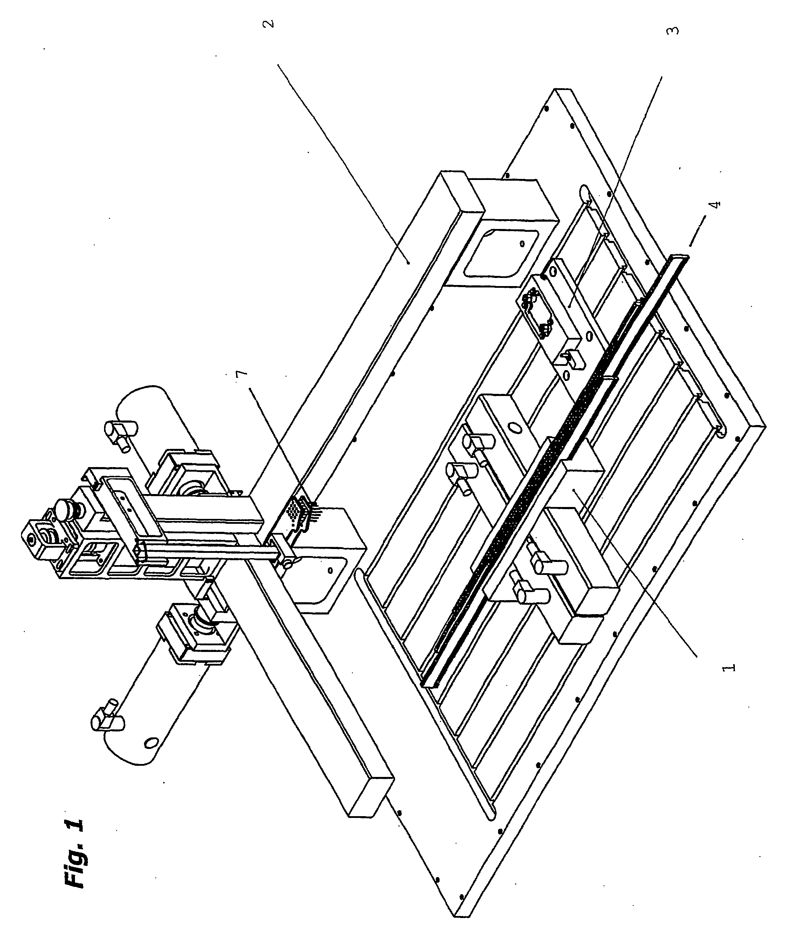

In Fig. 1 ist eine in drei Achsen beweglicher Anordnung 2 von Nadeln (4x4) 7 gezeigt. Die Nadelanordnung ist absenkbar und kann in beliebigen Positionen der Grundplatte auf diese zu oder von ihr weg bewegt werden. Dabei werden die Nadeln in die zueinander verschiebbaren Reihen von Behältern 4, die zur Aufnahme der Monomerlösungen dienen, eingetaucht und nehmen dabei eine diskrete und definierte Menge der in den Behältern 8 vorhandenen Lösung auf. Die so mit Flüssigkeit benetzten Nadeln werden dann zu der Reaktionskammer 3 geführt und legen dort wiederum durch absenken der Nadelanordnung die Flüssigkeit auf einer Reaktionsoberfläche innerhalb der Reaktionskammer ab.

Die Reaktionskammer 3 selbst dient zur Kontaktierung der Oberflächen mit den Lösungen, die sich in den Behältern 8 befinden. In die Reaktionskammer können auch Waschlösungen und andere Flüssigkeiten eingespeist werden, welche für die jeweiligen Reaktionen benötigt werden.

Zur Reinigung der Nadeln werden diese gegebenenfalls in eine Lösung eingetaucht, welche die Monomeren zu lösen vermag. Diese Lösung kann in einem zusätzlichen Behälter mit einer großen Öffnung, welche die gesamte Nadelanordnung aufnehmen kann oder aber in ein weiteres Raster von Einzelbehältern eingetaucht werden, deren Abstand dem Abstand der Nadeln entspricht.

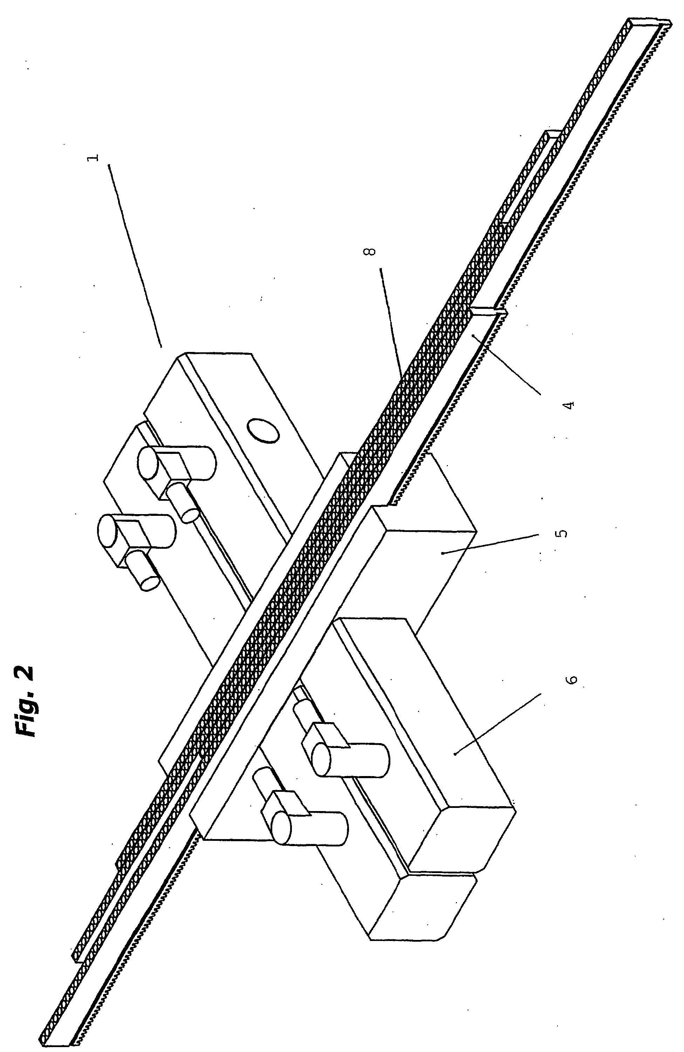

Das Kernstück der erfindungsgemäßen Anordnung ist der eigentliche Behälterträger 1, welcher in Fig. 2 im Detail dargestellt ist. Dieser Monomerbehälterträger 1 besteht im Wesentlichen aus einem Gehäuse 6, in welchem die Antriebseinheit 5 festgelegt ist und wobei das Gehäuse 6 wiederum an der Grundplatte fixiert ist. Auf der Antriebseinheit 5 sind die Behälterreihen 4 derart angebracht, dass diese mittels einer Verzahnung in ein Antriebszahnrad der Antriebseinheit 5 eingreifen. Die Antriebseinheit ist derart angesteuert, dass die Behälterreihen 4 jeweils unabhängig voneinander in verschiedenen Richtungen bewegt werden können. Dabei ist sichergestellt, dass die Anordnung der Behälterreihen 4 zu einander derart ist, dass die Behälter 8 der einzelnen Behälterreihen 4 in einer Reihe stehen.

Zum Umfang der vorliegenden Erfindung gehören auch weitere Ausführungsformen der erfindungsgemäßen Vorrichtung, welche sich dem Fachmann in naheliegender Weise erschließen. Entscheidend ist, dass durch die Anordnung der Behälterreihen 4 zueinander an jeder Nadel der Nadelanordnung 7 eine zuvor einstellbare Kombination von Lösungen angeordnet werden kann. Hierzu dienen die zueinander verschiebbaren Behälterreihen 4.

Die Herstellung der erfindungsgemäßen Vorrichtung ist an sich bekannt, da diese lediglich die üblichen fertigungstechnischen Kenntnisse erfordert und von einem Fachmann ohne erfinderisches Zutun hergestellt werden kann.

### Bezugszeichenliste

- 1: Behälterträger
- 2: Nadelpositionierer
- 3: Reaktionskammer
- 4: Behälterreihe
- 5: Antriebseinheit
- 6: Gehäuse
- 7: Nadelanordnung
- 8: Behälter

## Patentansprüche

1. Vorrichtung zur Herstellung von Oligomer-Arrays, umfassend
eine in mindestens zwei Dimensionen bewegbare Anordnung von mindestens zwei Reihen parallel zueinander ausgerichteter Nadeln (7), die senkrecht auf jede Position einer Grundplatte definiert bewegt werden können, nicht aber unabhängig voneinander;
einen Satz von mindestens zwei parallelen, zueinander verschiebbaren Reihen von Behältern (4) zur Aufnahme von Synthesereagenzien, wobei der Abstand dieser Behälter jeweils dem der Nadeln geteilt durch eine Ganze Zahl Z entspricht;
eine Kammer (3) zur Aufnahme einer Oberfläche, welche als Träger für die Oligomer-Arrays dient und durch welche Reagenzien über die Oberfläche leitbar sind.

2. Vorrichtung nach Anspruch 1, **dadurch gekennzeichnet, dass** die Reihen von Behältern, welche die Monomere enthalten, zueinander jeweils einen Abstand von 4,5 mm aufweisen.

3. Vorrichtung nach einem der voranstehenden Ansprüche, **dadurch gekennzeichnet, dass** die Anzahl der Reihen der Behälter der Anzahl der Reihen von Nadeln entspricht.

4. Vorrichtung nach einem der voranstehenden Ansprüche, **dadurch gekennzeichnet, dass** jede Reihe von Behältern mindestens n^{k} + (k - 1) miteinander fest verbundene Behälter umfasst, wobei k die Anzahl der Nadeln in einer Reihe und n die Anzahl der verwendeten unterschiedlichen Monomere ist.

5. Vorrichtung nach einem der voranstehenden Ansprüche, **dadurch gekennzeichnet, dass** die ganze Zahl Z eins, zwei, drei oder vier ist.

6. Vorrichtung nach einem der voranstehenden Ansprüche, **dadurch gekennzeichnet, dass** die Anzahl n der unterschiedlichen verwendeten Monomere drei oder vier ist.

7. Vorrichtung nach einem der voranstehenden Ansprüche, **dadurch gekennzeichnet, dass** die Anzahl der Nadeln k in einer Reihe 3 oder 4 ist.

8. Vorrichtung nach einem der voranstehenden Ansprüche, **dadurch gekennzeichnet, dass** durch Verschieben der Reihen von Behältern zueinander und geeignetes Befüllen der Behälter je einer Reihe mit Monomeren, der Satz von Nadeln durch einmaliges, gleichzeitiges Bewegen in die Behälter mit jeder beliebigen Kombination von Monomeren kontaktierbar ist.

9. Vorrichtung nach Anspruch 8, **dadurch gekennzeichnet, dass** die Reihen von Behältern jeweils in gleicher Reihenfolge mit Lösungen der Monomere befüllt sind.

10. Vorrichtung nach einem der voranstehenden Ansprüche, **dadurch gekennzeichnet, dass** weiterhin ein Behälter und/oder Satz von Behältern vorgesehen ist, wobei diese Behälter mit einer Waschlösung befüllt sind, in der sich Oligonukleotide oder PNAs lösen, und wobei der Satz von Nadeln durch gleichzeitiges Eintauchen in diese Waschlösung vor jedem Wechsel von Monomeren gereinigt wird.

11. Vorrichtung nach einem der voranstehenden Ansprüche, **dadurch gekennzeichnet, dass** jeder der Behälter Monomere enthält, die zur Synthese von Oligonukleotiden geeignet sind.

12. Vorrichtung nach einem der voranstehenden Ansprüche, **dadurch gekennzeichnet, dass** jeder der Behälter Monomere enthält, die zur Synthese von Peptide Nucleic Acids (PNAs) geeignet sind.

13. Verwendung einer Vorrichtung nach einem der voranstehenden Ansprüche zur Herstellung von Oligomer-Arrays.

14. Verwendung einer Vorrichtung nach einem der Ansprüche 1 bis 12 zur Herstellung von Oligomer-Arrays zur Analyse von Cytosin-Methylierungsmustern und/oder SNPs (Single Nucleotide Polymorphisms).

## Claims

1. A device for the production of oligomer arrays, comprising
an arrangement of at least two rows of needles (7) that are aligned parallel to one another, which rows can be moved in at least two dimensions, and in a defined manner, but not independently of one another, perpendicular to any position of a base plate,
a set of at least two parallel rows of containers (4), which rows can shift opposite each other and are used for the uptake of synthesis reagents, whereby the distance between these containers corresponds to the distance between the needles divided by a whole number Z;
a chamber (3) for receiving a surface which serves as a support for the oligomer arrays and through which reagents can be conducted over the surface.

2. The device according to claim 1, further **characterized in that** the rows of containers, which contain the monomers, have a distance of 4.5 mm relative to one another.

3. The device according to one of the preceding claims, further **characterized in that** the number of rows of containers corresponds to the number of rows of needles.

4. The device according to one of the preceding claims, further **characterized in that** each row of containers comprises at least n^{k} + (k - 1) containers that are solidly joined with one another, wherein k is the number of needles in a row and n is the number of different monomers used.

5. The device according to one of the preceding claims, further **characterized in that** the whole number Z is one, two, three or four.

6. The device according to one of the preceding claims, further **characterized in that** the number n of different monomers used is three or four.

7. The device according to one of the preceding claims, further **characterized in that** the number of needles k in one row is 3 or 4.

8. The device according to one of the preceding claims, further **characterized in that**, by shifting the rows of containers relative to one another and by suitable filling of the containers of each row with monomers, the set of needles can be contacted by a one-time, simultaneous movement into the container with any desired combination of monomers.

9. The device according to claim 8, further **characterized in that** the rows of containers are filled with solutions of monomers in the same sequence each time.

10. The device according to one of the preceding claims, further **characterized in that** a container and/or set of containers is further provided, whereby these containers are filled with a wash solution, in which oligonucleotides or PNAs are dissolved and whereby the set of needles is cleaned by simultaneous immersion in this wash solution prior to each change of monomers.

11. The device according to one of the preceding claims, further **characterized in that** each of the containers contains monomers which are suitable for the synthesis of oligonucleotides.

12. The device according to one of the preceding claims, further **characterized in that** each of the containers contains monomers which are suitable for the synthesis of peptide nucleic acids (PNAs).

13. Use of a device according to one of the preceding claims for the production of oligomer arrays.

14. Use of a device according to one of claims 1 to 12 for the production of oligomer arrays for the analysis of cytosine methylation patterns and/or SNPs (single nucleotide polymorphisms).

## Revendications

1. Dispositif de fabrication de réseaux d'oligomères comprenant :
- un agencement - mobile dans au moins deux dimensions - d'au moins deux rangées d'aiguilles (7) disposées en étant parallèles entre elles, lesquelles aiguilles peuvent être déplacées de façon définie, perpendiculairement à chaque position d'une plaque de base, mais non de façon indépendante les unes des autres :
- un ensemble d'au moins deux rangées parallèles - mobiles l'une par rapport à l'autre - de récipients (4) servant à recueillir des réactifs de synthèse, où l'espacement entre ces récipients correspond à chaque fois à celui existant entre les aiguilles, divisé par un nombre entier Z ;
- une chambre (3) servant à loger une surface qui sert de support pour les réseaux d'oligomères et par lesquels des réactifs peuvent être guidés, via la surface.

2. Dispositif selon la revendication 1, **caractérisé en ce que** les rangées de récipients, qui contiennent les monomères, présentent à chaque fois un espacement de 4,5 mm les séparant les unes des autres.

3. Dispositif selon l'une des revendications précédentes, **caractérisé en ce que** le nombre de rangées de récipients correspond au nombre de rangées d'aiguilles.

4. Dispositif selon l'une quelconque des revendications précédentes, **caractérisé en ce que** chaque rangée de récipients comprend au moins n^{k} + (k - 1) récipients reliés fixement entre eux, où k est le nombre d'aiguilles dans une rangée et n le nombre des différents monomères utilisés.

5. Dispositif selon l'une quelconque des revendications précédentes, **caractérisé en ce que** le nombre entier Z est un, deux, trois ou quatre.

6. Dispositif selon l'une quelconque des revendications précédentes, **caractérisé en ce que** le nombre n des différents monomères utilisés est trois ou quatre.

7. Dispositif selon l'une quelconque des revendications précédentes, **caractérisé en ce que** le nombre d'aiguilles k dans une rangée est égal à 3 ou 4.

8. Dispositif selon l'une quelconque des revendications précédentes, **caractérisé en ce que**, par déplacement des rangées de récipients, les unes par rapport aux autres, et par un remplissage approprié des récipients respectivement d'une rangée, avec des monomères, l'ensemble d'aiguilles, par un déplacement simultané et unique dans les récipients, peut être placé en contact avec chaque combinaison quelconque de monomères.

9. Dispositif selon la revendication 8, **caractérisé en ce que** les rangées de récipients sont remplies à chaque fois, suivant le même ordre, par des solutions des monomères.

10. Dispositif selon l'une quelconque des revendications précédentes, **caractérisé en ce qu'**il est prévu en outre un récipient et/ou un ensemble de récipients, où ces récipients sont remplis d'une solution détergente dans laquelle se dissolvent des oligonucléotides ou des acides nucléiques de peptides (PNA), et où l'ensemble d'aiguilles, avant chaque changement de monomères, est nettoyé par une immersion simultanée dans cette solution détergente.

11. Dispositif selon l'une quelconque des revendications précédentes, **caractérisé en ce que** chacun des récipients contient des monomères qui sont appropriés pour la synthèse d'oligonucléotides.

12. Dispositif selon l'une quelconque des revendications précédentes, **caractérisé en ce que** chacun des récipients contient des monomères qui sont appropriés pour la synthèse d'acides nucléiques de peptides (*en anglais : Peptide Nucleic Acids ou PNA*)*.*

13. Utilisation d'un dispositif selon l'une quelconque des revendications précédentes pour la fabrication de réseaux d'oligomères.

14. Utilisation d'un dispositif selon l'une quelconque des revendications 1 à 12 pour la fabrication de réseaux d'oligomères servant à l'analyse d'échantillons de méthylation de cytosine et/ou de polymorphismes de mononucléotides *(en anglais : Single Nucleotide Polymorphisms ou SNP)*.
